# EUROPEAN PATENT APPLICATION

(11) **EP 0 781 696 A2**
(43) Date of publication of application: **02.07.1997**
(21) Application number: 96120425.2
(22) Date of filing: 18.12.1996
(51) Int. Cl.: B60T 8/00

(54) **Brake apparatus for vehicle use**

(30) Priority: 27.12.1995 JP 341455/95
(71) Applicant: DENSO CORPORATION, Kariya-City Aichi-Pref. 448 (JP)
(72) Inventor: Sawada, Mamoru, c/o Denso Corporation, Kariya-city, Aichi-pref. 448 (JP)
(74) Representative: KUHNEN, WACKER & PARTNER

(57) **Abstract**

When a vehicle is in a braking state, an oscillating device such as a pump (40) applies oscillation to a seal member (105) in a wheel cylinder. In detail, oscillation is applied to the seal member (105) via brake fluid due to brake fluid pressure pulsation caused by pumping operation of the pump (40). As a result, since the seal member (105) has a kinetic friction characteristic, a responsiveness from supplying brake fluid to the wheel cylinder to the movement of the piston (102) disposed in the wheel cylinder can be improved. Accordingly, optimal brake force can be applied to the wheel.

## Description

### CROSS REFERENCE TO RELATED APPLICATION

This application is based upon and claims the benefit of priority of the prior Japanese Patent Application No. Hei. 7-341455 filed on December 27, 1995, the contents of which are incorporated herein by reference.

### BACKGROUND OF THE INVENTION

### 1. Field of the Invention:

The present invention relates to a brake apparatus for vehicle use.

### 2. Related Art:

In a conventional brake apparatus for vehicle use, braking force is generated in a vehicle in a manner such as the following. Namely, master-cylinder pressure is generated in a master cylinder by depression of a brake pedal by a driver. This master-cylinder pressure is conveyed to a wheel cylinder. Accordingly, a piston disposed within the wheel cylinder moves within the wheel cylinder by brake-fluid pressure conveyed from the master cylinder. By the movement of the piston, a brake pad is pressed against a disc attached to a wheel. As a result, braking force is applied to the wheel.

Additionally, a seal member is disposed in a sliding portion of the piston which slides within the wheel cylinder in order to prevent leakage of brake fluid.

In a brake apparatus wherein brake force is applied to a wheel when a sliding portion of a piston slides within a wheel cylinder, sliding resistance, i.e., friction resistance, acts on the sliding portion when the sliding portion is about to move and is moving. This friction resistance can be divided into two types. One is static friction resistance acting on the sliding portion when the sliding portion is about to move from a stopped state. The other one is kinetic friction resistance during movement of the sliding portion. Between the static friction resistance and kinetic friction resistance, the static friction resistance generally becomes larger. Therefore, the piston does not move unless force due to brake-fluid pressure which overcomes the static friction resistance is applied thereto. Consequently, braking force does not change until force due to brake-fluid pressure conveyed from a master cylinder overcomes static friction resistance acting on the sliding portion. Therefore, there may be a time lag from depression of a brake pedal to generation of braking force.

### SUMMARY OF THE INVENTION

It is an object of the present invention to provide a brake apparatus for vehicle use having improved responsiveness of variation of braking force applied to a wheel with respect to increase or decrease in brake-fluid pressure of a brake-fluid generation device such as a master cylinder.

To solve the above-described problem, the brake apparatus for vehicle use according to the present invention is provided with a kinetic friction-characteristic device so that a kinetic friction resistance acts on a sliding portion of a braking-force generating device. When kinetic friction resistance acts on the sliding portion by the kinetic friction-characteristic device, the sliding portion in the braking-force generating device may move against the kinetic friction resistance. Therefore, brake-fluid pressure applied to a wheel cylinder which forms a part of the braking pressure generating device can be increased or reduced under relatively low friction resistance and thereby with favorable response.

As a kinetic friction-characteristic device, an oscillating device to apply oscillation to the sliding portion via the brake fluid may be employed. Oscillation of the brake fluid is performed by causing pulsation of the brake fluid to be generated by fluctuation in brake-fluid pressure.

### BRIEF DESCRIPTION OF THE DRAWINGS

These and other objects, features and characteristics of the present invention will be appreciated from a study of the following detailed description, the appended claims, and drawings, all of which form a part of this application. In the drawings:
FIG. 1 is a model diagram of hydraulic piping in a first embodiment according to the present invention;
FIG. 2 is a cross-sectional view illustrating structure of a wheel cylinder;
FIG. 3 is a flowchart illustrating content of processing performed by an electronic control unit (ECU);
FIG. 4 is a table indicating a controlled state of several valves;
FIGS. 5A and 5B are time charts indicating mode of operation and effects of the first embodiment;
FIG. 6 is a flowchart illustrating content of processing performed by an electronic control unit (ECU) in a second embodiment;
FIGS. 7A and 7B are time charts indicating mode of operation and effects of the second embodiment; and
FIG. 8 is a block diagram illustrating structure of a third embodiment.

### DETAILED DESCRIPTION OF THE PREFERRED EMBODIMENTS

### (First Embodiment)

A first embodiment according to the present invention will be described hereinafter with reference to the drawings.

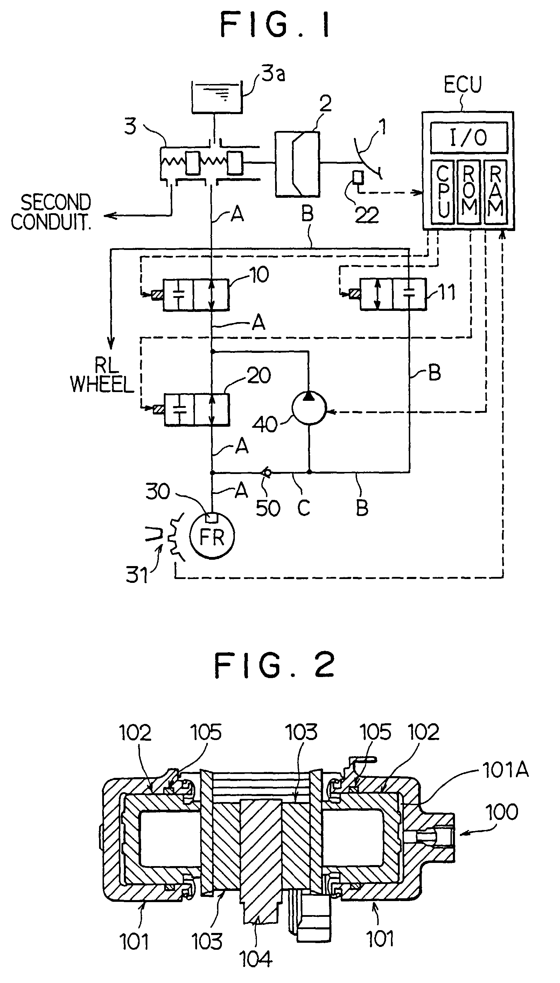

FIG. 1 is a model diagram indicating structure of the first embodiment. In FIG. 1, when a brake pedal 1 is depressed by a driver, braking force is generated at a vehicle. Brake pedal 1 is connected to a booster 2. Depression force applied to brake pedal 1 and pedal stroke thereof 0are conveyed to booster 2. Pedal 1 switches a brake switch 22 on or off in response to a depression stroke thereof to illuminate a stop lamp. The illumination of the stop lump allows visual confirmation by a driver of a vehicle to the rear or the like that the vehicle is in a braking state due to depression of brake pedal 1.

Booster 2 has at least a first chamber and a second chamber therein. Atmosphere pressure is introduced into the first chamber. Negative pressure is introduced into the second chamber. Negative pressure in the second chamber is introduced from, for example, an intake-manifold of an engine or a vacuum pump. Accordingly, booster 2 directly boosts the driver's pedal depression force or pedal stroke by a pressure differential in the first chamber and the second chamber. Booster 2 has a push rod to convey depression force or pedal stroke boosted in this way to a master cylinder 3. Master cylinder 3 generates master-cylinder pressure PU by the push rod compressing a master piston disposed in master cylinder 3. Further, master cylinder 3 is provided with a master reservoir 3a to supply brake fluid to master cylinder 3 or to accumulate excess brake fluid in master cylinder 3.

As described above, a vehicle is ordinarily provided with a brake-fluid pressure generating device including brake pedal 1, booster 2, master cylinder 3, and the like to cause braking force to act on the vehicle body.

A wheel cylinder 30 is disposed at the end of a conduit A extending from master cylinder 3. A first switching valve 10 and a first control valve 20 are disposed in the conduit A between wheel cylinder 30 and master cylinder 3.

A pump 40 is disposed in a return conduit C one end of which is connected to the conduit A between first control valve 20 and wheel cylinder 30 and the other end of which is connected to the conduit A between first switching valve 10 and first control valve 20. Brake fluid discharged from pump 40 is fed to the conduit A between first switching valve 10 and first control valve 20 via the return conduit C. Also, brake fluid of wheel cylinder 30 can be taken in by pump 40 via the return conduit C. A check valve 50 is disposed in the return conduit C to allow only the flow of brake fluid from the conduit A side to an intake-port side of pump 40. A second switching valve 11 is disposed in the backflow conduit B one end of which is connected to the conduit A between master cylinder 3 and first switching valve 10 and the other end of which is connected to the return conduit C.

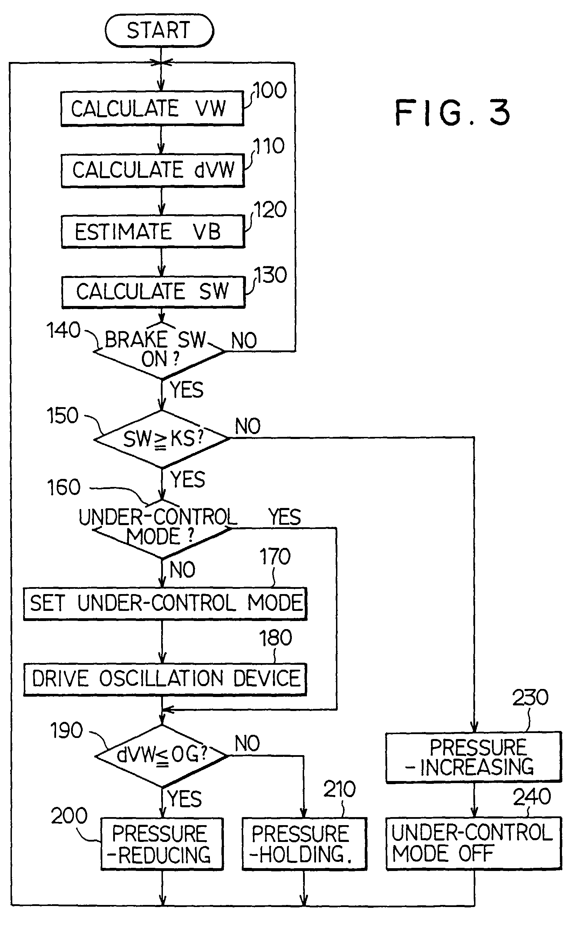

An electromagnetic-pickup type wheel-speed sensor 31 to detect a rotational wheel speed is disposed on a front-right wheel FR. Operational processing as indicated in the flowchart in FIG. 3 which will be described later is performed in an electronic control unit ECU on a basis of respective signals from wheel-speed sensor 31 and brake switch 22 or a stroke sensor (not shown).

The electronic control unit ECU is structured by a microcomputer made up of a CPU, a ROM, a RAM, an I/O interface, and the like. This electronic control unit ECU performs operational processing based on the signals from wheel-speed sensor 31 and the like. Further, the electronic control unit ECU sends control signals to first and second switching valves 10 and 11, first control valve 20 and pump 40, as described later.

First and second switching valves 10 and 11 and first control valve 20 are two-port, two-position valves wherein a valve body moves to switch a port responsive to excitation of a solenoid. The solenoid is excited when electrical power has been supplied thereto on a basis of a signal from an electronic control unit ECU. The valve positions of the several valves 10, 11 and 20 indicated in FIG. 1 represent a state during normal brake operation in which brake-fluid pressure corresponding to depression of brake pedal 1 is applied to wheel cylinder 30.

In the first embodiment, only structure with respect to the front-right wheel FR was described in detail. However, the same structure as that for the front-right wheel FR can be employed for other wheels as well.

Structure of wheel cylinder 30 as a braking-force generating device will be described next with reference to FIG. 2.

Brake fluid enters a brake-fluid chamber 101A in a cylinder 101 from a brake-fluid hole 100. Due to brake fluid having entered brake-fluid chamber 101A, a piston 102 is compressed in the direction to a pad 103 and then moves. Pad 103 moves in accordance with the movement of piston 102 so as to contact a disc 104 attached to a wheel. Accordingly, braking force is applied to the wheel by this contacting of pad 103 and disc 104.

Seal member 105 to seal brake fluid is provided in the inner surface of cylinder 101. Accordingly, seal member 105 slides on the peripheral surface of piston 102 during movement of piston 102. Seal member 105 is deformed in the direction of movement of piston 102 when piston 102 moves due to increase or decrease in brake-fluid pressure applied thereto. In this way, seal member 105 forms a part of a sliding portion of the braking-force generating device. Seal member 105 can be disposed on the peripheral surface of piston 102. In this case, seal member 105 slides on the inner surface of cylinder 101.

Next, content of processing performed by the electronic control unit ECU in a case where the present invention has been applied in a brake apparatus capable of performing anti-skid control will be described with reference to the flowchart indicated in FIG. 3.

In FIG. 3, several operational values, flags, and the like are initialized and processing is started in accompaniment to operation to switch on an ignition switch of the vehicle.

In step 100, wheel speed VW is computed on a basis of an output signal from wheel-speed sensor 31. Next, in step 110, wheel acceleration dVW which is change over time of the wheel speed VW is computed. In step 120, body speed VB is estimated on a basis of wheel speed VW, wheel acceleration dVW, or the like.

In step 130, a wheel's slip ratio SW is calculated on a basis of wheel speed VW and body speed VB. Moreover, wheel speed VW, wheel acceleration dVW, body speed VB and slip ratio SW are stored in the RAM or the like in the electronic control unit ECU.

In step 140, it is determined whether brake switch 22 is in an "on" state. That is to say, it is determined whether the driver has depressed brake pedal 1 and the vehicle is in a braking state. Processing advances to step 150 when it is determined herein that brake switch 22 is in an "on" state. On the other hand, processing returns to step 100 when negative determination is made in step 140.

In step 150 it is determined whether the slip ratio SW of the wheel which is presently the object of the processing for anti-skid control is a predetermined value KS or more. Processing illustrated in the flowchart of FIG. 3 is sequentially performed with respect to the all wheels of the vehicle. Processing advances to step 160 when the slip ratio SW has herein been determined to be larger than the predetermined value KS, that is to say, the wheel is in a tendency to lock. In step 160 it is determined whether a current mode is an under-control mode which represents anti-skid control presently in progress. Processing advances to step 190 in a case where the current mode has herein been determined to be the under-control mode. On the other hand, in a case where it has been determined not to be in the under-control mode, the under-control mode is set in step 170. After that, processing advances to step 180.

In step 180, an oscillating device is activated in response to the start of anti-skid control. In the first embodiment, pump 40 functions as the oscillation device to apply oscillation to wheel cylinder 30. That is to say, when pump 40 is driven, brake-fluid pressure pulsation is caused by brake fluid discharged from pump 40 and by the intake of brake fluid by pump 40. When this brake-fluid pressure pulsation is conveyed to wheel cylinder 30, kinetic friction resistance acts on between seal member 105 and piston 102.

Next, processing advances to step 190. In step 190 it is determined whether wheel acceleration dVW is "0" G or less. That is to say, it is determined, in a wheel-lock state wherein slip ratio SW is large, whether wheel speed VW is in a recovering state, or whether wheel speed VW is in a falling state.

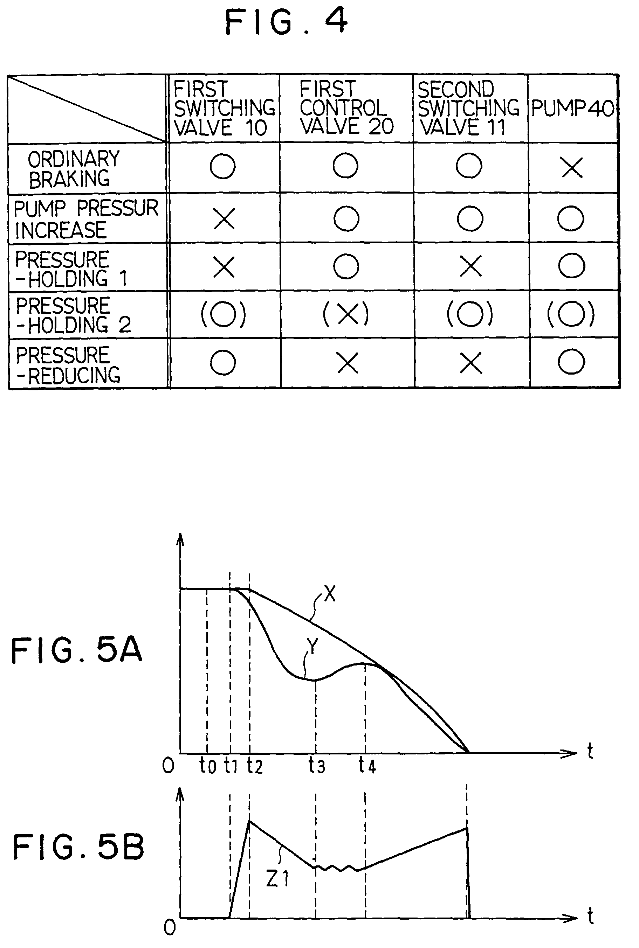

Processing advances to step 200 in a case where it has herein been determined that wheel acceleration dVW is 0 G or less, i.e., that wheel speed VW is in a falling state. In step 200, pressure-reducing control is executed. Herein, the several valves 10, 11, and 20 in this pressure-reducing control are driven to the valve positions illustrated in "pressure-reducing" in FIG. 4. That is to say, first switching valve 10 is controlled to a communicated position, and first control valve 20 and second switching valve 11 are controlled to an interrupted position. Accordingly, wheel-cylinder pressure is reduced due to the drive of pump 40. That is, brake fluid within the wheel cylinder 30 is taken in by pump 40 and then is returned to master cylinder 3 side via first switching valve 10. Further, because first control valve 20 has been controlled to be in an interrupted state, master-cylinder pressure PU is not conveyed to wheel cylinder 30 side. Additionally, because wheel-cylinder pressure PW is reduced by the intake of pump 40, brake-fluid pressure pulsation due to intake of brake fluid by pump 40 is conveyed to seal member 105 in wheel cylinder 30 during execution of this pressure-reducing control.

Processing advances to step 210 in a case where it has been determined that wheel acceleration dVW is greater than "0" G, i.e., that the slip ratio SW is large but wheel speed VW tends to recover. In step 210, pressure-holding control is executed. In this holding control, first and second switching valves 10 and 11 are controlled to an interrupted position and first control valve 20 is controlled to a communicated position, as shown in "pressure-holding 1" in FIG. 4. That is to say, brake fluid taken in or discharged by the pump 40 is circulated through first control valve 20 and the return conduit C. At this time, brake-fluid pressure pulsation from pump 40 accompanying the circulation of the brake fluid is conveyed to return conduit C and also to wheel cylinder 30 which is located at a position where circulating brake fluid can reach. As a result, oscillation due to the brake-fluid pressure pulsation is applied to seal member 105. As a result, even when wheel-cylinder pressure PW is held in anti-skid control, oscillation can be applied to seal member 105 in wheel cylinder 30. Therefore, Seal member 105 can be maintained at a kinetic friction characteristic even while holding the wheel-cylinder pressure PW.

Furthermore, pressure-holding control may be executed so as to control the several valves 10, 11, and 20 as shown in "pressure-holding 2" in FIG. 4. That is to say, first and second switching valves 10 and 11 are controlled to a communicated position and first control valve 20 is controlled to an interrupted position. As a result, the circulation passage is made and the brake fluid taken in and discharged by pump 40 circulates in the circulation passage passing through first and second switching valves 10 and 11. Brake-fluid pressure pulsation due to an intake operation of pump 40 is conveyed to wheel cylinder 30 via check valve 50 in the return conduit C as well. Therefore, seal member 105 in wheel cylinder 30 can be maintained at a kinetic friction characteristic.

After pressure-reducing control or pressure-holding control have been executed in step 200 or step 210, processing is transferred to step 100. In a case where slip ratio SW has become smaller than the predetermined value KS in step 150 in the subsequent processing, i.e., in a case where it has been determined that a locked state of the wheel has been avoided, processing advances to step 230.

In step 230, pressure-increasing control in anti-skid control is executed. In this pressure-increasing control, the valve positions of the several valves 10, 11, and 20 are controlled as shown in "pump pressure increase" in FIG. 4. That is to say, first switching valve 10 is controlled to an interrupted position and first control valve 20 and second switching valve 11 are controlled to a communicated position. Accordingly, master-cylinder pressure PU due to the driver's depression of brake pedal 1 is cut off by first switching valve 10. Brake fluid is taken in by pump 40 via second switching valve 11 from master cylinder 3 side, and is discharged via first control valve 20 toward wheel cylinder 30. Wheel-cylinder pressure PW is increased by the pressurized brake fluid discharged from pump 40.

When pressure-increasing control in step 230 ends, processing advances to step 240. In step 240, the under-control mode is switched off, and anti-skid control ends. Accompanying the ending of anti-skid control, the several valves 10, 11, and 20 are returned to the valve positions as shown in "ordinary braking" in FIG. 4.

Mode of operation and effects of the first embodiment will be described next with reference to FIGS. 5A and 5B.

In FIG. 5 A, curve X indicates a changing state of the vehicle's body speed VB, and curve Y indicates a changing state of wheel speed VW. Additionally, in FIG. 5 B, solid line Z1 indicates a changing state of wheel-cylinder pressure PW in the first embodiment.

It is assumed that the driver begins to depresses brake pedal 1 at time t0 and braking force begins to be applied to wheel cylinder 30 at time t1. A time lag between time t0 and time t1 is believed to be because of pedal's play and because seal member 105 has static friction resistance. When seal member 105 has static friction resistance, piston 102 in wheel cylinder 30 does not move until large brake-fluid pressure which overcomes this static friction resistance which is larger than kinetic friction resistance is applied to wheel cylinder 30.

In the stage of time t2, it is assumed that the wheel slip ratio SW has become larger than the predetermined value KS and that anti-skid control is started. Wheel-cylinder pressure PW is reduced by pressure-reducing control by time t3. Accordingly, when it is assumed that slip ratio SW large but wheel speed VW has begun to recover at time t3, i.e., that wheel acceleration dVW has become "0" G or more at time t3, pressure-holding control wherein seal member 105 of wheel cylinder 30 has a kinetic friction characteristic is executed. At time t4, the slippage state is canceled and pressure-increasing control in anti-skid control is performed for a predetermined time. After ending of pressure-increasing control, an ordinary braking operation is performed.

As shown in FIG. 5 B, when pressure-increasing control by pump 40 is performed from a state of holding of wheel-cylinder pressure PW, because seal member 105 has a kinetic friction characteristic during pressure-holding control, pressure-increasing control can be executed with favorable responsiveness. Therefore, optimal braking force can be applied to the wheel.

### (Second Embodiment)

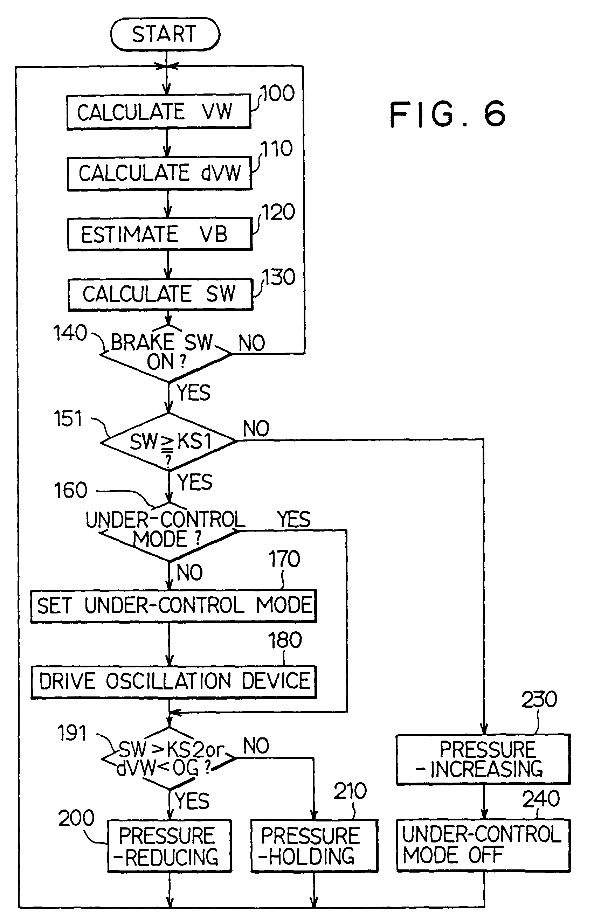

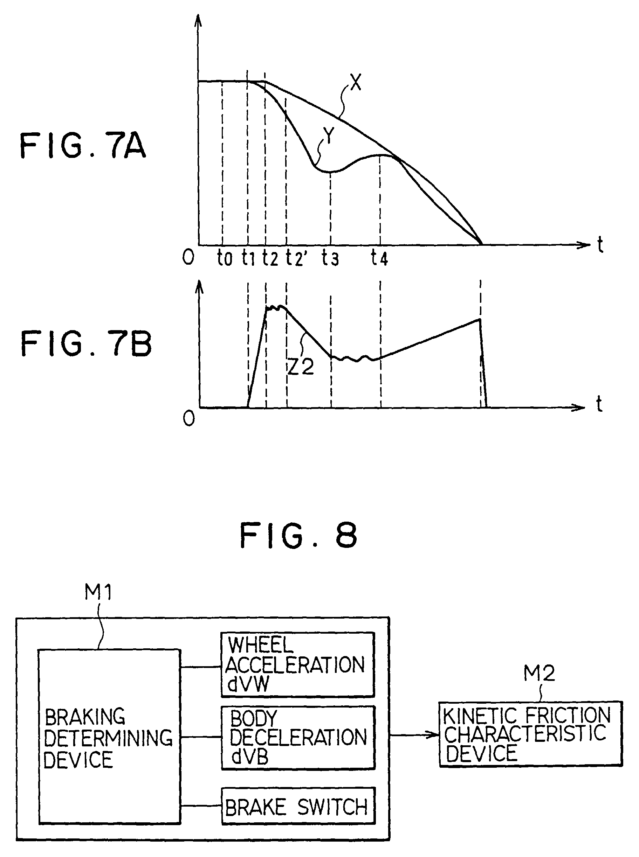

The second embodiment will be explained with reference to FIGS. 6, 7A and 7B. The structure of the second embodiment is the same as that of the first embodiment. Therefore, the explanation of that is omitted.

The content of the processing in the second embodiment is shown in the flowchart of FIG. 6. In FIG. 6, steps 151 and 191 are different from the flowchart in FIG. 3. Hereinafter, the processing with respect to steps 151 and 191 is described.

In step 151, it is determined whether slip ratio SW is greater than a predetermined value KS1. The predetermined value KS1 is set to determine the start of pressure-holding control.

In step 191, it is determined whether slip ratio SW is greater than a predetermined value KS2 which is larger than the predetermined value KS1, or whether wheel acceleration dVW is "0" G or less. When a positive determination is made at step 191, pressure-reducing control is performed at step 200. On the other hand, when a negative determination is made, pressure-holding control is performed at step 210. That is to say, when slip ratio SW is within a range between the predetermined value KS1 and the predetermined value KS2, or when wheel speed VW is in a recovering state, pressure-holding control is performed.

An example of a control result when wheel-brake pressure PW is controlled by processing shown in the flowchart in FIG. 6 is shown in FIGS 7A and 7B. As shown by solid line Z2 in FIG. 7B, pressure-holding control is performed prior to executing pressure-reducing control in anti-skid control. As a result, because seal member 105 has a kinetic friction characteristics during pressure-holding control, pressure-reducing control can be performed with favorable responsiveness as well.

### (Other Embodiments)

The present invention is not exclusively restricted to the above-described embodiments, but is variously modifiable as will be described hereinafter.

For example, according to the above-described embodiments, the present invention was applied in a brake apparatus for vehicle use which can perform anti-skid control. Seal member 105 in wheel cylinder 30 was caused to have a kinetic friction characteristic on a basis of the drive of pump 40 as an oscillation device when anti-skid control was being performed.

However, the present invention may be applied in an ordinary brake apparatus which does not perform anti-skid control. In this case, as shown in FIG. 8 as a third embodiment, a kinetic friction-characteristic device M2 may be driven when a braking-determining device M1 determines that a vehicle is in a braking state. Braking-determining device M1 receives a signal from at least one among a computing device to compute wheel acceleration dVW, a computing device to compute body deceleration dVB and a detecting device to detect the state of brake switch 22. That is, when the driver has depressed brake pedal 1 and the vehicle is in a braking state, pump 40 as a kinetic friction characteristic device M2 is driven. As a result, oscillation is applied to seal member 105 in wheel cylinder 30. Accordingly, responsiveness of increasing or decreasing change in wheel-cylinder pressure can be improved with respect to a pedal operation.

Additionally, braking-determining device M1 is not exclusively restricted to determining a state of braking by brake pedal 1, but may cause the kinetic friction characteristic device M2 to be driven in a case where ,for example, an engine brake is applied to the engine of the vehicle. That is to say, in a case where an engine brake is applied, the possibility of brake pedal 1 being depressed next is strong. Therefore, pump 40 is driven in advance and oscillation is applied to seal member 105 to establish a kinetic friction characteristic. As a result, piston 102 is moved at low resistance from the initial operating time at which the driver depresses brake pedal 1. As a result, responsiveness can be further improved.

Additionally, the kinetic friction characteristic was given to seal member 105 due to brake-fluid pressure pulsation caused by pump 40. However, the kinetic friction characteristic device M2 is not exclusively restricted to pump 40. For example, brake-fluid pressure pulsation may apply to seal member 105 by repeatedly communicating and interrupting second control valve 11 or the like at high speed. When second control valve 11 is driven in this manner, oscillation caused by the drive of second control valve 11 can be conveyed to seal member 105 via brake fluid. Accordingly, this oscillation establishes a kinetic friction characteristic at seal member 105. Further, as the kinetic friction characteristic device M2, a device which directly causes piston 102 to move may be employed. For example, an electromagnetic coil is disposed around piston 102 formed from a ferromagnetic material. When an alternating current having a predetermined frequency is applied to the electromagnetic coil, piston 102 oscillates in accordance to the alternating current. As a result, seal member 105 can have the kinetic friction characteristic.

Additionally, the kinetic friction characteristic device M2 was driven on a basis of the condition that the vehicle is in a braking state. However, the kinetic friction characteristic device M2 may be driven on a basis of, for example, an ignition switch of the vehicle being switched on.

According to the above-described embodiments, the present invention was applied in a brake apparatus for vehicle use which performs anti-skid control. However, it may be applied in a brake apparatus performing, for example, traction control, so as to drive the kinetic friction-characteristic device M2 during performance of traction control. If seal member 105 can be caused to have kinetic friction resistance during pressure-holding control in traction control, pressure increase or decrease in traction control can also be carried out with favorable responsiveness.

## Claims

1. A brake apparatus for vehicle use comprising:
a braking force generating device (30, 100-105) which generates braking force applied to a wheel, said braking force generating device (30, 100-105) having a sliding portion (102, 105) which slides when braking force is applied to the wheel; and
an oscillation device (40) which applies oscillation to said sliding portion (102, 105).

2. A brake apparatus for vehicle use as recited in claim 1, wherein:
said sliding portion (102, 105) slides in response to brake fluid supplied to said braking force generating device (30, 100-105), and
said oscillation device (40) applies oscillation to said sliding portion (102, 105) by causing said brake fluid to oscillate so that said sliding portion (102, 105) has a kinetic friction characteristic.

3. A brake apparatus for vehicle use as recited in claim 2, wherein:
said oscillation device (40) causes pulsation in brake fluid supplied to said braking-force generating means (30, 100-105).

4. A brake apparatus for vehicle use as recited in claim 1, further comprising:
a braking determining device (22, step 140, M1) which determines whether said vehicle is in a braking state,
wherein said oscillation device (40) applies oscillation to said sliding portion (102, 105) when said braking determining device (22, step 140, M1) has determined that said vehicle is in a braking state.

5. A brake apparatus for vehicle use as recited in claim 4, wherein:
said braking determining device (22, step 140, M1) determines whether said braking force generating device applies braking force to said wheel, and
said oscillation device (40) applies oscillation to said sliding portion (102, 105) when said braking determining device (22, step 140, M1) determines that said braking force generating device (30, 100-105) applies braking force to said wheel.

6. A brake apparatus for vehicle use as recited in claim 4, wherein:
said oscillation device (40) constantly imparts pulsation to said brake fluid acting upon said braking force generating device (30, 100-105) while said braking determining device (22, step 140, M1) determines that said braking force generating device (30, 100-105) applies braking force to said wheel.

7. A brake apparatus for vehicle use as recited in claim 4, wherein:
said braking determining device (M1) determines whether said vehicle is in a braking state on a basis of a value of a wheel acceleration.

8. A brake apparatus for vehicle use as recited in claim 4, wherein:
said braking determining device (M1) determines whether said vehicle is in a braking state on a basis of a value of a vehicle body deceleration.

9. A brake apparatus for vehicle use as recited in claim 4, further comprising:
a brake pedal (1) operated by a driver,
wherein said braking determining device (M1) determines that said vehicle is in a braking state on a basis of an operation of said brake pedal.

10. A brake apparatus for vehicle use as recited in claim 1, further comprising:
an anti-skid control device (ECU, 10, 11, 20 and 40) which controls brake fluid pressure applied to said braking force generating device (30, 100-105) in response to a slip state of said wheel,
wherein said oscillating device (40) applies oscillation to said sliding portion (102, 105) when said anti-skid control device (ECU, 10, 11, 20 and 40) controls said brake fluid pressure.

11. A brake apparatus for vehicle use as recited in claim 1, further comprising:
an anti-skid control device (ECU, 10, 11, 20 and 40) which controls brake fluid pressure applied to said braking force generating device (30, 100-105) in response to a slip state of said wheel,
wherein said oscillating device (40) applies oscillation to said sliding portion (102, 105) when said anti-skid control device (ECU, 10, 11, 20 and 40) holds said brake fluid pressure applied to said braking force generating device (30, 100-105).

12. A brake apparatus for vehicle use as recited in claim 1, wherein
said braking force generating device (30, 100-105) includes a wheel cylinder in which a piston (102) slides when brake fluid is supplied to said wheel cylinder, and a seal member (105) prevents said brake fluid from leaking out of said wheel cylinder,
said oscillation device (40) applies oscillation to said seal member (105) by causing said brake fluid to oscillate.

13. A brake apparatus for vehicle use as recited in claim 12, wherein said oscillation device is a pump (40) which takes in brake fluid and discharges pressurized brake fluid, and brake fluid pressure pulsation caused by said pump (40) is allied to said seal member (105).

14. A brake apparatus for vehicle use as recited in claim 12, wherein said oscillation device switches a position of a valve (20) disposed in a conduit connected to said wheel cylinder, and brake fluid pressure pulsation caused by an switching operation with respect to said valve (20) is applied to said seal member (105).

15. A brake apparatus for vehicle use, comprising:
a braking force generating device (30, 100-105) which generates braking force applied to a wheel when brake fluid pressure is applied thereto, said braking force generating device (30, 100-105) having a sliding portion (102, 105) which slides when said brake fluid is supplied to said braking force generating device (30, 100-105); and
an oscillation device (40) which applies oscillation to said sliding portion (102, 105) when fluctuation of said brake fluid pressure is within a predetermined range.

16. A brake apparatus for vehicle use as recited in claim 15, wherein:
said oscillation device (40) causes pulsation in brake fluid supplied to said braking-force generating means (30, 100-105).

17. A brake apparatus for vehicle use as recited in claim 15, further comprising:
a braking determining device (22, step 140, M1) which determines whether said vehicle is in a braking state,
wherein said oscillation device (40) applies oscillation to said sliding portion (102, 105) when said braking determining device (22, step 140, M1) has determined that said vehicle is in a braking state.

18. A brake apparatus for vehicle use as recited in claim 17, wherein:
said braking determining device (22, step 140, M1) determines whether said braking force generating device applies braking force to said wheel, and
said oscillation device (40) applies oscillation to said sliding portion (102, 105) when said braking determining device (22, step 140, M1) determines that said braking force generating device (30, 100-105) applies braking force to said wheel.

19. A brake apparatus for vehicle use as recited in claim 17, wherein:
said oscillation device (40) constantly imparts pulsation to said brake fluid acting upon said braking force generating device (30, 100-105) while said braking determining device (22, step 140, M1) determines that said braking force generating device (30, 100-105) applies braking force to said wheel.

20. A brake apparatus for vehicle use as recited in claim 17, wherein:
said braking determining device (M1) determines whether said vehicle is in a braking state on a basis of a value of a wheel acceleration.

21. A brake apparatus for vehicle use as recited in claim 17, wherein:
said braking determining device (M1) determines whether said vehicle is in a braking state on a basis of a value of a vehicle body deceleration.

22. A brake apparatus for vehicle use as recited in claim 17, further comprising:
a brake pedal (1) operated by a driver,
wherein said braking determining device (M1) determines that said vehicle is in a braking state on a basis of an operation of said brake pedal.

23. A brake apparatus for vehicle use as recited in claim 15, further comprising:
an anti-skid control device (ECU, 10, 11, 20 and 40) which controls brake fluid pressure applied to said braking force generating device (30, 100-105) in response to a slip state of said wheel,
wherein said oscillating device (40) applies oscillation to said sliding portion (102, 105) when said anti-skid control device (ECU, 10, 11, 20 and 40) controls said brake fluid pressure.

24. A brake apparatus for vehicle use as recited in claim 15, further comprising:
an anti-skid control device (ECU, 10, 11, 20 and 40) which controls brake fluid pressure applied to said braking force generating device (30, 100-105) in response to a slip state of said wheel,
wherein said oscillating device (40) applies oscillation to said sliding portion (102, 105) when said anti-skid control device (ECU, 10, 11, 20 and 40) holds said brake fluid pressure applied to said braking force generating device (30, 100-105).

25. A brake apparatus for vehicle use as recited in claim 15, wherein
said braking force generating device (30, 100-105) includes a wheel cylinder in which a piston (102) slides when brake fluid is supplied to said wheel cylinder, and a seal member (105) prevents said brake fluid from leaking out of said wheel cylinder,
said oscillation device (40) applies oscillation to said seal member (105) by causing said brake fluid to oscillate.

26. A brake apparatus for vehicle use as recited in claim 25, wherein said oscillation device is a pump (40) which takes in brake fluid and discharges pressurized brake fluid, and brake fluid pressure pulsation caused by said pump (40) is allied to said seal member (105).

27. A brake apparatus for vehicle use as recited in claim 25, wherein said oscillation device switches a position of a valve (20) disposed in a conduit connected to said wheel cylinder, and brake fluid pressure pulsation caused by an switching operation with respect to said valve (20) is applied to said seal member (105).
